# EUROPÄISCHE PATENTSCHRIFT

(11) **EP 2 459 979 B1**
(45) Veröffentlichungstag und Bekanntmachung des Hinweises auf die Patenterteilung: **25.10.2017**
(21) Anmeldenummer: 10724271.1
(22) Anmeldetag: 12.05.2010
(51) Int. Cl.: G01L 25/00

(54) **PRÜFSTAND MIT EINER VORRICHTUNG ZUM KALIBRIEREN EINER KRAFT-MESSEINRICHTUNG**
TEST STAND WITH AN APPARATUS FOR CALIBRATING A FORCE-MEASURING DEVICE
BANC D'ESSAI POUR UN DISPOSITIF D'ÉTALONNAGE D'UN DISPOSITIF DE MESURE DE FORCE

(30) Priorität: 31.07.2009 DE 102009035410
(43) Veröffentlichungstag der Anmeldung: 06.06.2012
(73) Patentinhaber: HORIBA Europe GmbH, 64293 Darmstadt (DE)
(72) Erfinder: BORMANN, Jens, 64319 Pfungstadt (DE); PÄTSCHKE, Klaus, 68642 Bürstadt (DE); KÜNNE, Kai, 68519 Viernheim (DE)
(74) Vertreter: Müller Hoffmann & Partner
(86) Internationale Anmeldenummer: PCT/EP2010/002953
(87) Internationale Veröffentlichungsnummer: WO 2011/012182

(56) Entgegenhaltungen:
- EP-A2- 1 293 765
- DE-A1- 3 331 708

## Beschreibung

Die Erfindung betrifft ein Kalibrierverfahren für einen Prüfstand sowie einen Prüfstand mit einer Vorrichtung zum Kalibrieren einer Kraft-Messeinrichtung.

Derartige Prüfstände, z.B. Fahrzeug-, Motoren- oder Getriebeprüfstände, werden unter anderem von der Automobilindustrie eingesetzt und unterstützen die Forschung und Entwicklung mit Hilfe von z.B. Funktionstests, Dauerlaufversuchen zur mechanischen Belastungsprüfung sowie Verbrauchs-, Abgas-, Geräusch- oder Klimauntersuchungen. Die Prüfstände simulieren hierbei den Betrieb eines Fahrzeugs oder von Fahrzeugkomponenten unter verschiedenen Umwelt- oder Anwendungsbedingungen. Auf dem Prüfstand können das zu prüfende Fahrzeug oder die Fahrzeugkomponenten mit einer Lasteinrichtung, z.B. einer Asynchronmaschine, einer hydraulischen Leistungsbremse oder einer Wirbelstrombremse gekoppelt werden. Die Lasteinrichtung simuliert die Last, gegen die der Motor im realen Betrieb arbeiten muss.

Neben zahlreichen Messgrößen ist das zwischen dem Fahrzeug und der Lasteinrichtung wirkende Drehmoment von besonderer Bedeutung. Zu diesem Zweck ist die Lasteinrichtung pendelnd gelagert, so dass das von dem Fahrzeug auf die Lasteinrichtung aufgebrachte Drehmoment am pendelnd gelagerten Gehäuse der Lasteinrichtung abgestützt werden muss. Am Gehäuse der Lasteinrichtung ist ein Hebelarm angebracht, an dessen äußerem Ende eine Kraft-Messeinrichtung vorgesehen ist, um die über den Hebelarm übertragene Kraft zu messen. Anhand der gemessenen Kraft und der Länge des hier wirksamen Hebelarms lässt sich so das auf die Lasteinrichtung wirkende und somit vom Fahrzeug abgegebene Moment bestimmen.

Da an die Genauigkeit der Drehmomentmessung hohe Anforderungen gestellt werden, muss die Kraft-Messeinrichtung von Zeit zu Zeit kalibriert werden.

Zum Kalibrieren müssen bei einem Rollenprüfstand die Rollen frei drehbar sein. Auf die Lasteinrichtung bzw. auf das Gehäuse der Lasteinrichtung wird daraufhin ein bestimmtes Referenzdrehmoment aufgebracht, dessen Wert mit dem vom Prüflings-Drehmomentaufnehmer (Hebelarm und Kraft-Messeinrichtung) gemessenen Drehmomentwert verglichen wird, um im Bedarfsfall eine Justage insbesondere der Kraft-Messeinrichtung durchzuführen.

Das Referenz-Drehmoment muss mit größtmöglicher Genauigkeit vorbestimmt sein bzw. vorgewählt werden können. Zu diesem Zweck hat sich z.B. ein auf dem Doppelhebelprinzip basierendes Kalibrierverfahren bewährt, das in der EP 1 293 765 beschrieben ist. Dort ist am Gehäuse der Lasteinrichtung (hier: ein Dynamometer) ein Hebelarm vorgesehen, an dessen Ende die zu kalibrierende Kraft-Messeinrichtung angeordnet ist. Gegenüber von dem Hebelarm ist auf der anderen Seite des Gehäuses zur Durchführung der Kalibrierung ein zweiter Hebelarm am Gehäuse der Lasteinrichtung anzubringen, an dem eine Belastungseinrichtung in Form eines hydraulischen oder pneumatischen Zylinders vorgesehen ist. Der Zylinder bringt eine Kraft auf den zusätzlichen Hebelarm auf. Die Kraft wird durch eine Referenz-Kraftmessdose bestimmt. Wenn die Lasteinrichtung ansonsten durch keine weitere äußere Last belastet wird, muss dementsprechend von der eigentlichen Kraft-Messeinrichtung ein entsprechender von den Hebelverhältnissen abhängiger Wert gemessen werden. Ist dies nicht der Fall, muss die Kraft-Messeinrichtung justiert werden.

Aus der DE 33 31 708 A1 ist eine Vorrichtung zur Kontrolle bzw. Eichung einer Drehmomentmessvorrichtung bekannt. Dort erstrecken sich von dem Gehäuse einer5 Pendelmaschine zwei Hebelarme. Der eine Hebelarm ist mit einer Drehmomentmessvorrichtung gekoppelt, während der andere Hebelarm mit einer Einstellschraube und einem Kraftmeggerät gekoppelt ist. Durch Drehen der Einstellschraube wird eine Kraft ausgeübt, gegen die eine von der Drehmomentmessvorrichtung ausgeübte Rückstellkraft wirkt. Die von der Einstellschraube bewirkte Kraft wird durch das Kraftmessgerät gemessen und mit der von dem Drehmomentmessgerät gemessenen Kraft verglichen.

Bei den aus dem Stand der Technik bekannten Kalibriervorrichtungen ist jeweils ein nicht unerheblicher apparativer Zusatzaufwand, z.B. in Form von zusätzlichen Hebelarmen erforderlich. Zudem besteht die Möglichkeit, dass durch ungeeignete Krafteinleitung die Lasteinrichtung aus ihren Lagern gehoben wird, wodurch das Kalibrierergebnis beeinträchtigt bzw. verfälscht werden kann.

Der Erfindung liegt daher die Aufgabe zugrunde, einen Prüfstand mit einer Vorrichtung zum Kalibrieren einer Mess-Einrichtung anzugeben, bei dem der apparative Aufwand minimiert ist und trotzdem verbesserte Kalibrierergebnisse erhalten werden können.

Die Aufgabe wird erfindungsgemäß durch einen Prüfstand mit den Merkmalen von Anspruch 1 gelöst. Weiterhin wird ein Kalibrierverfahren für einen derartigen Prüfstand angegeben. Vorteilhafte Ausgestaltungen sind in den abhängigen Ansprüchen angegeben.

Ein Prüfstand mit einer Vorrichtung zum Kalibrieren einer Kraft-Messeinrichtung weist eine um eine Hauptachse pendelnd gelagerte Lasteinrichtung mit einem Gehäuse auf, von dem weg sich senkrecht zu der Hauptachse ein Hebelarm erstreckt. Mit dem Hebelarm ist eine Kraftübertragungseinrichtung gekoppelt, zum Übertragen einer sich senkrecht zu der Hauptachse und senkrecht zu dem Hebelarm nach einer Seite gerichteten Kraft, wobei die Kraft-Messeinrichtung durch die Kraftübertragungseinrichtung mit dem Hebelarm gekoppelt ist. Der Prüfstand ist gekennzeichnet durch eine Referenzkraft-Erzeugungseinrichtung zum Erzeugen einer Referenzkraft, eine mit der Referenzkraft-Erzeugungseinrichtung gekoppelte Referenzkraft-Messeinrichtung zum Messen der jeweils erzeugten Referenzkraft, und durch eine mit dem Hebelarm gekoppelte Referenzkraft-Übertragungseinrichtung zum Übertragen der Referenzkraft auf den Hebelarm.

Der Hebelarm steht somit in bekannter Weise von dem Gehäuse senkrecht weg. Darunter ist nicht zwingend zu verstehen, dass sich der Hebelarm lediglich in senkrechter Richtung weg von dem Gehäuse erstrecken darf. Vielmehr ist damit auch gemeint, dass sich der Hebelarm z.B. schräg von dem Gehäuse weg erstreckt. Es kommt lediglich darauf an, dass die Ausrichtung des Hebelarms eine Erstreckungskomponente umfasst, die senkrecht weg von dem Gehäuse und der Achse verläuft, um auf diese Weise einen um die Hauptachse wirksamen Hebelarm zu erhalten.

Die Hauptachse der Lasteinrichtung entspricht der Hauptachse des Prüfstands.

Der Hebelarm ist in bekannter Weise über die Kraftübertragungseinrichtung auf der Kraft-Messeinrichtung abgestützt, so dass die Kraft-Messeinrichtung eine Kraft messen kann, die von dem Hebelarm ausgeübt wird. Wenn der Ort, an dem die Kraftübertragungseinrichtung die Kraft auf die Kraft-Messeinrichtung leitet, bekannt ist und somit auch der Abstand dieses Orts von der Hauptachse, so ist auch die wirksame Länge des Hebelarms bekannt. Aus der wirksamen Länge und der gemessenen Kraft lässt sich präzise das auf die Lasteinrichtung wirkende Drehmoment bestimmen.

Der Aufbau des Prüfstands ist insoweit bekannt.

Im Unterschied zum Stand der Technik ist an dem nur nach einer Seite gerichteten Hebelarm zusätzlich die Referenzkraft-Übertragungseinrichtung vorgesehen, die die von der Referenzkraft-Erzeugungseinrichtung erzeugte Referenzkraft auf dem Hebelarm einleitet.

Somit erzeugt die Referenzkraft-Erzeugungseinrichtung die Referenzkraft, die zusätzlich durch die im Kraftfluss angeordnete Referenzkraft-Messeinrichtung gemessen wird. Die Referenzkraft wird auf dem Hebelarm eingeleitet, so dass die Kraft an anderer Stelle über die Kraftübertragungseinrichtung auf die Kraft-Messeinrichtung geleitet wird. Die Kraft-Messeinrichtung, z.B. eine Zugkraft-Messeinrichtung, kann auf diese Weise derart kalibriert werden, dass sie - unter Berücksichtigung der jeweiligen Hebelverhältnisse - einen Kraftmesswert, z.B. einen Zugkraft-Messwert, anzeigt, der zu dem von der Referenzkraft-Messeinrichtung gemessenen Referenzkraftwert proportional ist.

Die Kraft-Messeinrichtung mit der Kraftübertragungseinrichtung und die Referenzkraft-Erzeugungseinrichtung mit der Referenzkraft-Übertragungseinrichtung können bezüglich der Hauptachse auf der gleichen Seite des Gehäuses angeordnet sein. Dadurch ist für den Kalibriervorgang kein zusätzlicher Hebelarm erforderlich. Vielmehr kann die Kalibriervorrichtung (Referenzkraft-Erzeugungseinrichtung, Referenzkraft-Messeinrichtung und Referenzkraft-Übertragungseinrichtung) in der Nähe der Kraft-Messeinrichtung angeordnet werden. Zudem kann ein Ausheben der Lasteinrichtung aus ihrem Drehpunkt bzw. ihren Lagern vermieden werden.

Die Referenzkraft-Erzeugungseinrichtung kann eine Pneumatik- oder eine Hydraulik-Zylindereinheit aufweisen. Dabei kann die Referenzkraft-Erzeugungseinrichtung wahlweise Kräfte in beiden Richtungen generieren. Auf diese Weise kann der Kalibriervorgang vereinfacht, beschleunigt und automatisiert werden. Verschiedene Lastzyklen und -schritte lassen sich einfach, z.B. durch aperiodisches Ansteuern der Referenzkraft-Erzeugungseinrichtung, realisieren. So kann z.B. auch eine Remanenz (Nullpunkt-Hysterese) in der Kraft-Messkette detektiert und beim Justieren berücksichtigt werden. Auf diese Weise kann die Messkette optimiert werden.

Die Lasteinrichtung kann ein Dynamometer sein, wobei der Hebelarm an einem Statorgehäuse des Dynamometers befestigt ist und sich senkrecht zur Hauptachse erstreckt. Ein Dynamometer hat sich als Lasteinrichtung in der Praxis bestens bewährt. Der Hebelarm kann auch schräg zum Statorgehäuse verlaufen. Es kommt lediglich darauf an, dass er eine Erstreckungskomponente aufweist, die senkrecht zur Hauptachse und damit zum Statorgehäuse verläuft.

Die Referenzkraft-Übertragungseinrichtung kann am äußeren Ende des Hebelarms angeordnet sein. Auf diese Weise wird die Länge des Hebelarms vollständig ausgenutzt und die Genauigkeit der Kalibrierung verbessert. Die für den normalen Messbetrieb notwendige Kraftübertragungseinrichtung, z.B. eine Zugkraft-Übertragungseinrichtung, und die Kraft-Messeinrichtung können dann zwischen dem äußeren Ende des Hebelarms und dem Statorgehäuse der Lasteinrichtung angeordnet werden.

Bei einer Ausführungsform weist die Referenzkraft-Übertragungseinrichtung ein das äußere Ende des Hebelarms umschließendes Joch auf. Mit Hilfe des Jochs ist eine zuverlässige Übertragung der Referenzkraft möglich. Zudem erlaubt die Bereitstellung des Jochs eine hochpräzise Festlegung der wirksamen Länge des Hebelarms und damit der Messgenauigkeit.

Oberhalb und unterhalb des Hebelarms kann jeweils zwischen dem Joch und dem Hebelarm eine Paarung aus einer Messerschneide und einem Messerschneidenlager angeordnet sein, zur Übertragung der Referenzkraft. Dabei kann entweder jeweils die Messerschneide auf dem Hebelarm und das gegenüberliegende Messerschneidenlager auf dem Joch oder jeweils die Messerschneide auf dem Joch und das gegenüberliegende Messerschneidenlager auf dem Hebelarm vorgesehen sein. Mit Hilfe der Messerschneide und dem zugeordneten Messerschneidenlager zwischen Joch und Hebelarm lässt sich gewährleisten, dass die Referenzkraft lediglich über die Messerschneide, also mit einer Linienberührung auf den Hebelarm übertragen wird. Die Messerschneide erstreckt sich dabei parallel zur Hauptachse. Dementsprechend präzise lässt sich die wirksame Länge des Hebelarms bestimmen.

Das Joch kann einen im Wesentlichen viereckigen Rahmen aufweisen, der das äußere Ende des Hebelarms umschließt. Die Angabe eines "viereckigen" Rahmens erfordert nicht, dass der Rahmen tatsächlich exakt vier Ecken aufweisen muss. Vielmehr ist unter einem viereckigen Rahmen ein Rahmen zu verstehen, der eine Oberseite und eine Unterseite aufweist, die durch zwei seitliche Verbindungselemente miteinander verbunden sind. Daraus ergibt sich im Prinzip eine Art Viereck, welches selbstverständlich auch noch mehr Ecken oder gerundete Ecken aufweisen kann.

Bei einer Variante kann jeweils an der oberen Seite und/oder an der unteren Seite des Rahmens eine Kante eines Folienstücks an dem Rahmen befestigt sein, wobei ein zwischen der oberen Seite und der unteren Seite des Rahmens befindlicher Bereich des Folienstücks an dem Ende des Hebelarms befestigt ist.

Bei dieser Variante ist es nicht notwendig, die oben beschriebenen Paarungen aus Messerschneide und Messerschneidenlager vorzusehen. Vielmehr wird im hier beschriebenen Fall die Referenzkraft über das Folienstück übertragen. Das Folienstück kann aus Kunststoff oder Metall bestehen. Es weist eine hohe Zugfestigkeit, jedoch eine minimale Knicksteifigkeit auf. Dementsprechend ist das Folienstück geeignet, die Referenzkraft als Zugkraft vom Joch auf den Hebelarm zu übertragen. Wenn hingegen die Kraft in die Gegenrichtung wirkt, wird der vorher unter Zug belastete Teil des Folienstücks jetzt mit einer Druckkraft beaufschlagt, die aufgrund der geringen Knick- bzw. Drucksteifigkeit nicht übertragen werden kann. Die Knicksteifigkeit sollte dabei so gering wie möglich sein, um die Referenzkraft nicht zu beeinträchtigen. Die Referenzkraft wird dann also im umgekehrten Fall durch den anderen, gegenüberliegenden Teil des Folienstücks übertragen, der dann in der Lage ist, eine Zugkraft zu leiten.

Beim Einbau des Folienstücks kann die Folie schlaff, z.B. mit einer leichten Wölbung oder Wellung, also in jedem Fall ohne Vorspannung eingebaut werden, um im oder um den Nullpunkt einen mechanisch unbelasteten Zustand zu gewährleisten.

Das Folienstück sollte möglichst dünn sein, um die wirksame Länge des Hebelarms präzise bestimmen zu können.

Das Folienstück kann als einteiliges Folienstück ausgebildet sein. In diesem Fall kann das Folienstück mit seiner oberen Kante an der oberen Seite des Rahmens des Jochs und mit seiner unteren Kante an der unteren Seite des Joch-Rahmens festgeklemmt sein. Ein mittlerer Bereich des Folienstücks ist dann auf einem stirnseitigen Ende des Hebelarms festklemmbar.

Bei einer anderen Ausführungsform kann das Folienstück durch zwei separate Folienteilstücke gebildet werden, wobei das eine der Folienteilstücke ein oberes Folienteilstück ist, das zwischen der oberen Kante des Rahmens und dem stirnseitigen Ende des Hebelarms festgeklemmt ist, und das andere der Folienteilstücke ein unteres Folienteilstück ist, das zwischen der unteren Kante des Rahmens und dem stirnseitigen Ende des Hebelarms festgeklemmt ist.

Die Entscheidung, ob das Folienstück als ein Teil oder in Form von zwei separaten Folienteilstücken realisiert wird, wird im Wesentlichen auf Grundlage von Montageüberlegungen zu treffen sein.

Die Referenzkraft-Erzeugungseinrichtung kann über eine Ausgleichseinrichtung auf einem mit einem Fundament des Prüfstands gekoppelten Lager abgestützt sein, wobei die Ausgleichseinrichtung zum Ausgleichen von Fluchtungs- und/oder Winkelfehlern ausgebildet ist. Mit Hilfe der Ausgleichseinrichtung lässt sich die Position und Ausrichtung der Referenzkraft-Erzeugungseinrichtung mit hoher Präzision einstellen, um eine genau senkrecht auf den Hebelarm wirkende Referenzkraft zu erzeugen.

Bei einer Ausführungsform kann eine Steuereinrichtung zum Ansteuern der Referenzkraft-Erzeugungseinrichtung vorgesehen sein, wobei durch die Steuereinrichtung beim Einstellen einer gewünschten Soll-Referenzkraft kurzzeitig eine höhere Kraft als die Soll-Referenzkraft bewirkbar ist, wenn die Referenzkraft erhöht wird, oder kurzzeitig eine niedrigere Kraft als die Soll-Referenzkraft bewirkbar ist, wenn die Referenzkraft vermindert wird.

Mit dieser Maßnahme kann ein Überschwingen beim Erzeugen der Referenzkraft bewirkt werden, um z.B. die Haftreibung in den Lagern der Lasteinrichtung zu überwinden. Die Steuereinrichtung bewirkt ein kurzzeitiges Überschwingen über den eigentlich gewünschten Soll-Referenzkraftwert hinaus und stellt die gewünschte Referenzkraft erst nach dem Überschwingen ein.

Bei einem Verfahren zum Kalibrieren einer Kraft-Messeinrichtung in einem Prüfstand ist zunächst ein Prüfstand mit den oben angegebenen Merkmalen bereitzustellen. Danach folgen die Schritte
- Erzeugen einer Referenzkraft durch die Referenzkraft-Erzeugungseinrichtung,
- Messen der Referenzkraft durch die Referenzkraft-Messeinrichtung,
- Messen der an der Kraft-Messeinrichtung wirkenden Kraft in Form eines Kraft-Istwerts,
- Bestimmen eines Kraft-Sollwerts, der aufgrund der gemessenen Referenzkraft und der wirksamen Hebelverhältnisse an der Kraft-Messeinrichtung anliegen müsste, und
- Kalibrieren der Kraft-Messeinrichtung derart, dass der von der Kraft-Messeinrichtung gemessene Kraft-Istwert mit dem Kraft-Sollwert verglichen wird.

Nach dem Kalibrieren kann erforderlichenfalls ein Justieren der Kraft-Messeinrichtung und/oder der mit dieser verbundenen elektronischen Schaltungen durchgeführt werden.

Das Verfahren eignet sich insbesondere zum Kalibrieren einer Zugkraft-Messeinrichtung und kann derart ausgestaltet sein, dass beim Erzeugen der Referenzkraft zunächst ein Überschwingen der Referenzkraft über den gewünschten (Ziel-)Referenzkraft-Wert hinaus bewirkt wird.

Die Referenzkraft-Erzeugungseinrichtung kann derart angesteuert werden, dass der Hebelarm nicht mit einer Kraft durch die Referenzkraft-Erzeugungseinrichtung belastet wird. Dadurch kann ein mechanisch unbelasteter Zustand des Hebelarms erreicht werden, um den Nullpunkt zu kalibrieren.

Diese und weitere Vorteile und Merkmale der Erfindung werden nachfolgend anhand eines Beispiels unter Zuhilfenahme der begleitenden Figuren näher erläutert. Es zeigen:
- **Fig. 1**: in perspektivischer Ansicht einen Ausschnitt eines Prüfstands mit Kalibriervorrichtung;
- **Fig. 2**: einen Bildausschnitt zu Fig. 1;
- **Fig. 3**: eine schematische Darstellung mit einem Ende eines Hebelarms und mit einem dieses umgebenden Joch;
- **Fig. 4**: in Perspektivansicht eine Variante der Kalibriervorrichtung;
- **Fig. 5**: die Kalibriervorrichtung von Fig. 4 in teilweise geschnittener Darstellung; und
- **Fig. 6**: eine weitere Variante der Kalibriervorrichtung.

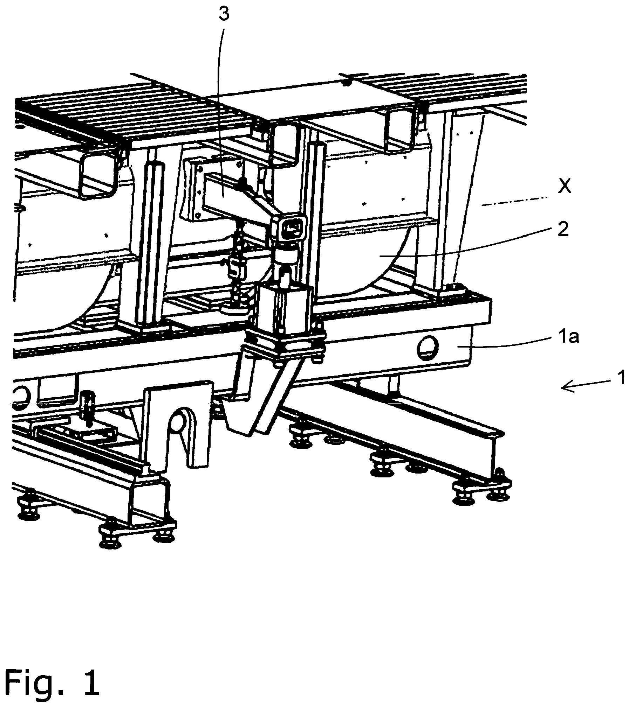

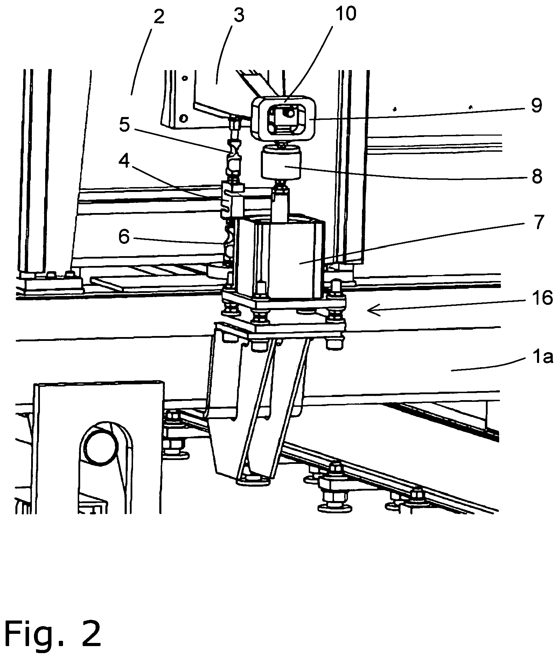

Die Fig. 1 und 2 zeigen einen Ausschnitt eines Prüfstands.

Der Prüfstand weist einen sehr massiv und stabil ausgeführten Grundrahmen 1 mit mehreren Stahlträgern bzw. -rohren auf. Der Grundrahmen 1 weist einen Tragrahmen 1a auf, auf dem ein Dynamometer 2 als Lasteinrichtung um seine Hauptachse X pendelnd gelagert ist. Die Pendellagerung ist in der Fig. 1 nicht erkennbar, jedoch aus dem Stand der Technik vielfältig bekannt. So ist es üblich, ein Dynamometer pendelnd zu lagern und auf diese Weise das auf Dynamometer wirkende Drehmoment anhand der Reaktionskraft an einem an dem Dynamometer angebrachten Hebelarm zu bestimmen.

So ist auch im vorliegenden Fall an dem Statorgehäuse des Dynamometers 2 ein Hebelarm 3 angebracht, der sich senkrecht zur Hauptachse X weg von dem Statorgehäuse erstreckt.

Der Hebelarm 3 ist derart steif ausgeführt, dass er sich auch unter Lasteinwirkung möglichst wenig verformt. Etwa in der Mitte des Hebelarms 3 ist unterhalb des Hebelarms 3 ein Kraftsensor 4 in Form eines S-förmigen Biegestabs als Kraft-Messeinrichtung angeordnet. Der Kraftsensor 4 ist zwischen einem oberen Federstab 5 und einem unteren Federstab 6 platziert. Der obere Federstab 5 dient als Kraftübertragungseinrichtung und verbindet den Kraftsensor 4 mit dem Hebelarm 3, während der untere Federstab 6 den Kraftsensor 4 gegenüber dem Fundament 1 abstützt.

Mit Hilfe des Kraftsensors 4 kann im normalen Prüfbetrieb die Kraft präzise bestimmt werden, mit der sich der Hebelarm 3 auf den oberen Federstab 5 abstützt. Mit Hilfe der gemessenen Kraft und anhand der wirksamen Länge des Hebelarms 3 (gemessen von der Hauptachse X bis zu der Stelle, an der der obere Federstab 5 an dem Hebelarm 3 angekoppelt ist) lässt sich das Drehmoment ermitteln, das auf das Dynamometer 2 durch den nicht dargestellten Prüfling (z.B. ein Fahrzeugmotor) einwirkt.

Die Kraftmesskette mit dem Kraftsensor 4 muss von Zeit zu Zeit kalibriert werden. Zu diesem Zweck ist eine Kalibriervorrichtung vorgesehen, die einen Pneumatikzylinder 7 als Referenzkraft-Erzeugungseinrichtung, eine Kraftmessdose 8 (z.B. eine Ringtorsionskraftmessdose) als Referenzkraft-Messeinrichtung und eine Referenzkraft-Übertragungseinrichtung 9 zum Einleiten der Referenzkraft auf den Hebelarm 3 aufweist.

Mit Hilfe der Kalibriervorrichtung kann eine präzise bestimmte Referenzkraft auf den Hebelarm 3 ausgeübt werden. In Abhängigkeit von den Hebelverhältnissen muss dementsprechend eine entsprechende Kraft auf den Kraftsensor 4 wirken. Wenn der Kraftsensor 4 diese Kraft nicht misst, sondern einen abweichenden Messwert, so kann er in einfacher Weise justiert werden. Während des Kalibriervorgangs ist das Dynamometer 2 unbelastet und von dem Prüfling getrennt, so dass das Referenzmoment im Idealfall vollständig von dem Kraftsensor 4 abgestützt werden muss.

Der Pneumatikzylinder 7 ist geeignet, eine vorgegebene Kraft mit hoher Präzision einzustellen und stabil zu halten. Der Pneumatikzylinder 7 wirkt in beide Richtungen, also nach oben und nach unten und erzeugt entsprechende Kräfte. Die Kraftmessdose 8 dient zum Messen der von dem Pneumatikzylinder 7 generierten Referenzkraft, die über die Referenzkraft-Übertragungseinrichtung 9 in den Hebelarm 3 eingeleitet wird. Die Kraftmessdose 8 kann auch durch andere Bauelemente realisiert werden, z.B. durch einen S-förmigen Biegestab. Dementsprechend kann auch der Kraftsensor 4 durch eine andere Komponente, z.B. durch eine Kraftmessdose realisiert sein.

Die Referenzkraft-Übertragungseinrichtung 9 ist in Form eines Jochs 10 ausgeführt, das einen im Wesentlichen viereckigen Rahmen aufweist, der ein Ende des Hebelarms 3 umgibt.

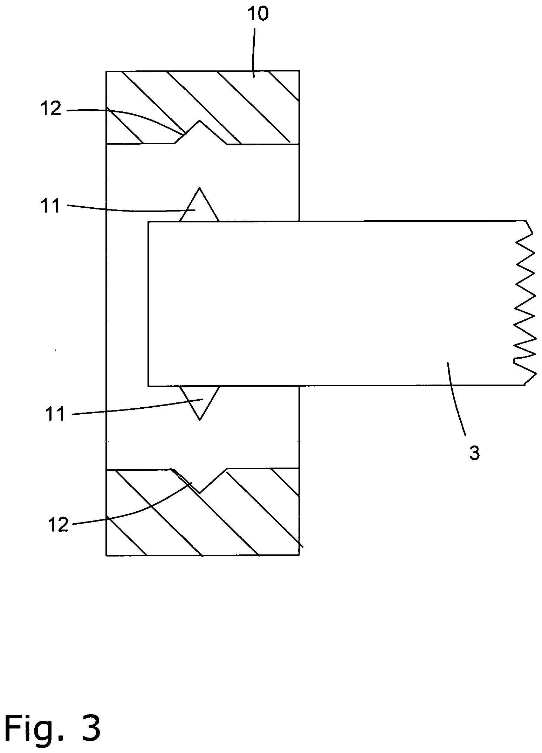

Fig. 3 zeigt den Aufbau des Jochs 10 im Verhältnis zu dem Ende des Hebelarms 3 in prinzipieller Darstellung.

Am Ende des Hebelarms 3 ist jeweils auf der Oberseite und auf der Unterseite eine Messerschneide 11 angeordnet. Den beiden Messerschneiden 11 gegenüberliegend sind in dem Joch 10 Messerschneidenlager 12 ausgebildet. Die Messerschneidenlager 12 sind in Fig. 3 mit einer prismenförmigen Vertiefung dargestellt. Sie können aber auch z.B. durch ebene Hartmetallplättchen oder in anderer Weise gebildet werden, um im Zusammenwirken mit den Messerschneiden 11 eine präzise Übertragung der jeweiligen Kraft zu gewährleisten.

Bei einem vertikalen Verlagern des Jochs 10 aufgrund einer Wirkung durch den Pneumatikzylinder 7 bewegt sich eines der Messerschneidenlager 12 über die ihm zugeordnete Messerschneide 11. Dadurch entsteht entlang der Messerschneide 11 ein sich in Fig. 3 senkrecht zur Zeichenebene erstreckender Linienkontakt. Die Messerschneide 11 erstreckt sich entlang der Hauptrichtung X des Dynamometers 2.

Über den Linienkontakt wird die von dem Pneumatikzylinder 7 erzeugte Kraft auf den Hebelarm 3 übertragen, wodurch der Hebelarm 3 versucht, das Dynamometer 2 in seiner Pendellagerung zu verschwenken. Dementsprechend wird am Kraftsensor 4 eine Kraft eingeleitet, die von dem Kraftsensor 4 gemessen werden kann.

Bei einer entgegengesetzten Bewegung des Jochs 10 aufgrund einer entgegengesetzten Wirkung des Pneumatikzylinders 7 kommt die gegenüberliegende Paarung von Messerschneide 11 und Messerschneidenlager 12 in Kontakt. Der Hebelarm 3 wird dann in entgegengesetzter Richtung belastet.

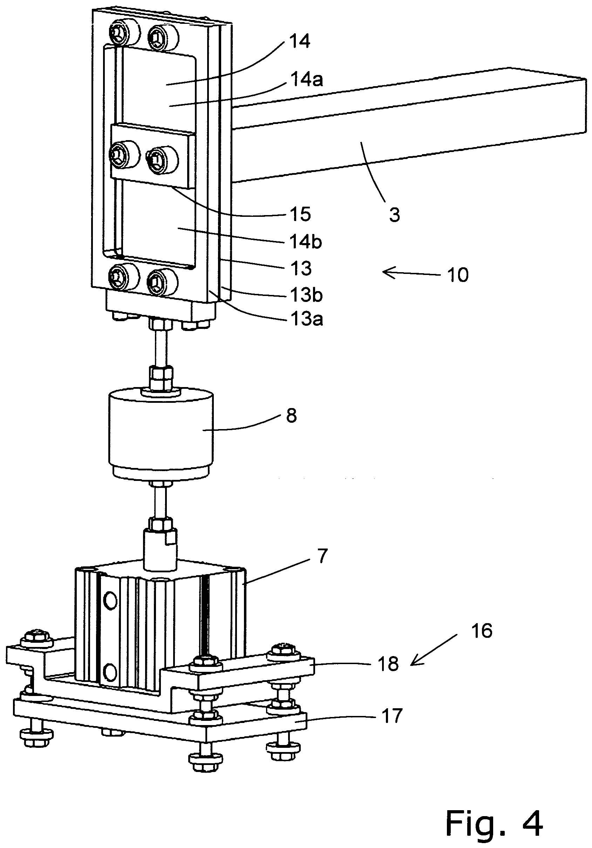

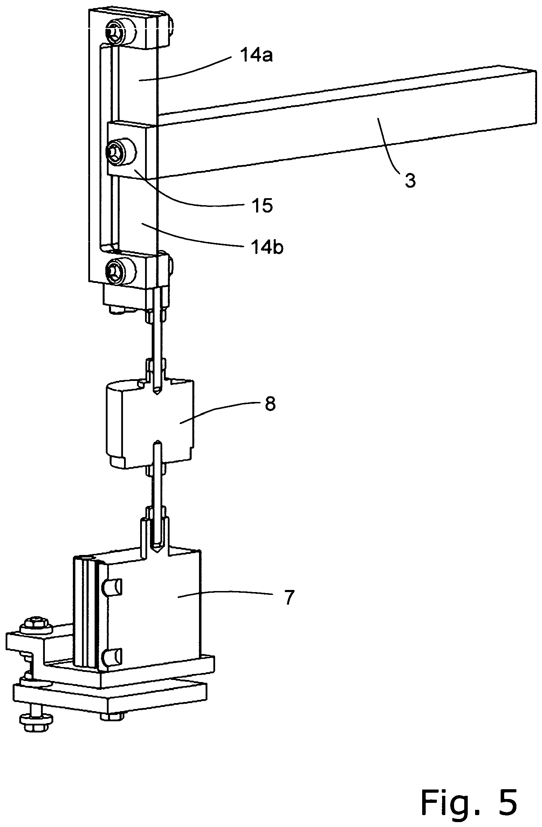

Die Fig. 4 und 5 (Schnittdarstellung) zeigen eine Variante, insbesondere für das Joch 10.

Dabei ist das Joch 10 ebenfalls als viereckiger Rahmen 13 ausgeführt. Es weist jedoch nicht - wie die in Fig. 3 dargestellte Variante - Messerlager auf. Vielmehr besteht das Joch 10 bzw. der Rahmen 13 aus zwei planen Hälften 13a und 13b, die durch Schrauben zusammengehalten werden.

Zwischen die beiden Hälften 13a und 13b ist eine biegeelastische, zugfeste Metallfolie 14 eingelegt. Anstelle der Metallfolie 14 kann auch eine Kunststofffolie verwendet werden, sofern sie eine ausreichende Festigkeit aufweist.

Die Metallfolie 14 ist an den gegenüberliegenden Seiten oben und unten zwischen den Hälften 13a und 13b durch eine Verschraubung eingeklemmt. Im mittleren Bereich ist die Metallfolie 14an der Stirnseite des Hebelarms 3 befestigt, wodurch das Joch 10 an dem Hebelarm 3 gehalten wird. Die Befestigung des Jochs 10 am Hebelarm 3 wird von einer Folienverschraubung gebildet, wobei ein auf die Metallfolie 14 aufgesetztes Klemmstück 15 die Metallfolie 14 mit der Stirnseite des Hebelarms 3 verbindet.

Bei dieser Befestigungsweise der Metallfolie 14 mit dem Hebelarm 3 bzw. bei dieser Art der Krafteinleitung in den Hebelarm 3 kann sich die effektive Länge (Länge, die für die Bestimmung des sich aus der wirksamen Referenzkraft ergebenden Referenzdrehmoments maßgeblich ist) des Hebelarms 3 nicht verändern, wie dies bei der in Fig. 3 gezeigten Ausführungsform aufgrund von Querkraftwirkungen möglich ist. Bei der in den Fig. 4 und 5 gezeigten Art der Kraftübertragung im Joch ist immer diejenige Folienhälfte (obere Folienhälfte 14a oder untere Folienhälfte 14b) an der Kraftübertragung beteiligt, die auf Zug belastet wird. Generiert der Pneumatikzylinder 7 eine Zugkraft nach unten, überträgt die untere Folienhälfte 14b die Zugkraft auf den Hebelarm 3; generiert der Pneumatikzylinder 7 eine Druckkraft nach oben, überträgt die obere Folienhälfte 14a im Joch 10 die nach oben gerichtete Kraft des Pneumatikzylinders 7.

Die effektive Länge des Hebelarms 3, die in die Drehmomentberechnung eingeht, setzt sich aus der horizontalen Hebelarmlänge (Abstand von der Hauptachse X bis zum Krafteinleitungsort) plus der halben Foliendicke zusammen. Diese Länge braucht nur einmal exakt bestimmt zu werden; sie ändert sich nicht, da kein Verschleiß auftreten kann.

Im unteren Bildteil von Fig. 4, aber auch in den Fig. 1 und 2 ist eine Ausgleichseinrichtung 16 gezeigt. Die Ausgleichseinrichtung 16 koppelt den Pneumatikzylinder 7 mit dem Fundament 1 des Prüfstands, um den Pneumatikzylinder 7 abzustützen. Dabei ist die Ausgleichseinrichtung 16 in der Lage, Fluchtungs- und/oder Winkelfehler auszugleichen.

Zu diesem Zweck weist die Ausgleichseinrichtung 16 eine untere Platte 17 und eine obere Platte 18 auf, die durch Schraubenverbindungen miteinander gekoppelt sind. Durch Justieren der Schrauben lassen sich die genannten Fehler ausgleichen.

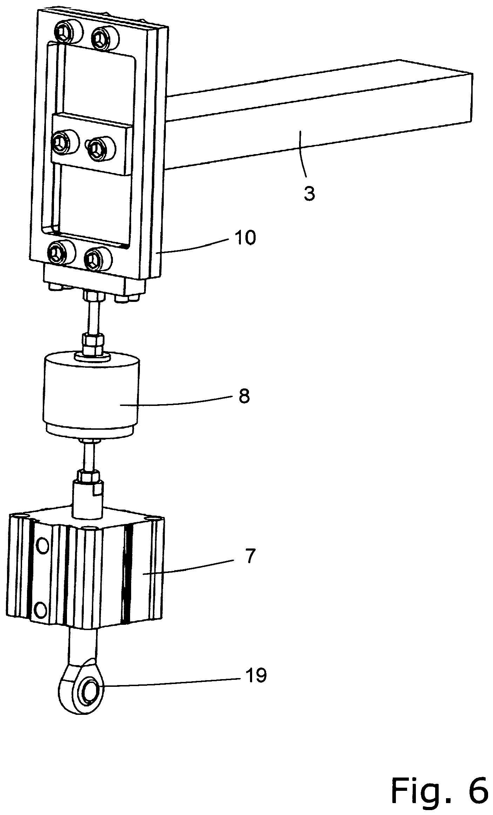

Fig. 6 zeigt eine Variante, bei der anstelle der Ausgleichseinrichtung 16 ein Kugelgelenk 19 vorgesehen ist. Auch das Kugelgelenk 19 ermöglicht den Ausgleich von Fluchtungs- oder Winkelfehlern.

## Patentansprüche

1. Prüfstand mit einer Vorrichtung zum Kalibrieren einer Kraft-Messeinrichtung (4), mit
- einer um eine Hauptachse (X) pendelnd gelagerten Lasteinrichtung (2) mit einem Gehäuse;
- einem sich von dem Gehäuse weg senkrecht zu der Hauptachse (X) erstreckenden Hebelarm (3); und mit
- einer mit dem Hebelarm (3) gekoppelten Kraftübertragungseinrichtung (5) zum Übertragen einer sich senkrecht zu der Hauptachse (X) und senkrecht zu dem Hebelarm (3) gerichteten Kraft;
wobei
- die Kraft-Messeinrichtung (4) durch die Kraftübertragungseinrichtung (5) mit dem Hebelarm (3) gekoppelt ist;
**gekennzeichnet durch**
- eine Referenzkraft-Erzeugungseinrichtung (7) zum Erzeugen von Referenzkräften in einander entgegen gesetzten Richtungen;
- eine mit der Referenzkraft-Erzeugungseinrichtung (7) gekoppelte Referenzkraft-Messeinrichtung (8) zum Messen der jeweils erzeugten Referenzkraft; und **durch**
- eine mit dem Hebelarm (3) gekoppelte Referenzkraft-Übertragungseinrichtung (10) zum Übertragen der Referenzkraft auf den Hebelarm (3).

2. Prüfstand nach Anspruch 1, **dadurch gekennzeichnet,**
**dass** die Kraft-Messeinrichtung (4) mit der Kraftübertragungseinrichtung (5) und die Referenzkraft-Erzeugungseinrichtung (7) mit der Referenzkraft-Übertragungseinrichtung (10) bezüglich der Hauptachse auf der gleichen Seite des Gehäuses angeordnet sind.

3. Prüfstand nach Anspruch 1 oder 2, **dadurch gekennzeichnet,**
**dass** die Referenzkraft-Erzeugungseinrichtung (7) eine Pneumatik- oder eine Hydraulik-Zylindereinheit aufweist.

4. Prüfstand nach einem der Ansprüche 1 bis 3, **dadurch gekennzeichnet, dass**
- die Lasteinrichtung (2) ein Dynamometer ist; und dass
- der Hebelarm (3) an einem Statorgehäuse des Dynamometers befestigt ist und sich senkrecht zur Hauptachse (X) erstreckt.

5. Prüfstand nach einem der Ansprüche 1 bis 4, **dadurch gekennzeichnet,**
**dass** die Referenzkraft-Übertragungseinrichtung (10) am äußeren Ende des Hebelarms (3) angeordnet ist.

6. Prüfstand nach einem der Ansprüche 1 bis 5, **dadurch gekennzeichnet,**
**dass** die Referenzkraft-Übertragungseinrichtung ein das äußere Ende des Hebelarms (3) umschließendes Joch (10) aufweist.

7. Prüfstand nach Anspruch 6, **dadurch gekennzeichnet, dass**
- oberhalb und unterhalb des Hebelarms (3) jeweils zwischen dem Joch (10) und dem Hebelarm (3) eine Paarung aus einer Messerschneide (11) und einem Messerschneidenlager (12) angeordnet ist, zum Übertragen der Referenzkraft; und dass
- entweder jeweils die Messerschneide (11) auf dem Hebelarm (3) und das gegenüberliegende Messerschneidenlager (12) auf dem Joch (10) oder jeweils die Messerschneide (11) auf dem Joch (10) und das gegenüberliegende Messerschneidenlager (12) auf dem Hebelarm (3) vorgesehen sind.

8. Prüfstand nach Anspruch 6, **dadurch gekennzeichnet, dass**
- das Joch (10) einen im Wesentlichen viereckigen Rahmen (13) aufweist, der das äußere Ende des Hebelarms (3) umschließt;
- jeweils an der oberen Seite und/oder an der unteren Seite des Rahmens (13) eine Kante eines Folienstücks (14) an dem Rahmen (13) befestigt ist; und dass
- ein zwischen der oberen Seite und der unteren Seite des Rahmens (13) befindlicher Bereich des Folienstücks (14) an dem Ende des Hebelarms (3) befestigt ist.

9. Prüfstand nach Anspruch 8, **dadurch gekennzeichnet, dass**
- das Folienstück (14) mit seiner oberen Kante an der oberen Seite des Rahmens (13) und mit seiner unteren Kante an der unteren Seite des Rahmens (13) festgeklemmt ist; und dass
- ein mittlerer Bereich des Folienstücks (14) auf einem stirnseitigen Ende des Hebelarms (3) festgeklemmt ist.

10. Prüfstand nach Anspruch 8 oder 9, **dadurch gekennzeichnet, dass**
- das Folienstück (14) durch zwei separate Folienteilstücke gebildet wird;
- das eine der Folienteilstücke ein oberes Folienteilstück ist, das zwischen der oberen Kante des Rahmens (13) und dem stirnseitigen Ende des Hebelarms (3) festgeklemmt ist; und dass
- das andere der Folienteilstücke ein unteres Folienteilstück ist, das zwischen der unteren Kante des Rahmens (13) und dem stirnseitigen Ende des Hebelarms (3) festgeklemmt ist.

11. Prüfstand nach einem der Ansprüche 1 bis 10, **dadurch gekennzeichnet, dass**
die Referenzkraft-Erzeugungseinrichtung (7) über eine Ausgleichseinrichtung (16) auf einem mit einem Fundament (1) des Prüfstands gekoppelten Lager abgestützt ist, wobei die Ausgleichseinrichtung (16) zum Ausgleichen von Fluchtungs- und/oder Winkelfehlern ausgebildet ist.

12. Prüfstand nach einem der Ansprüche 1 bis 11, **dadurch gekennzeichnet, dass**
- eine Steuereinrichtung zum Ansteuern der Referenzkraft-Erzeugungseinrichtung (7) vorgesehen ist; und dass
- durch die Steuereinrichtung beim Einstellen einer gewünschten Soll-Referenzkraft kurzzeitig eine höhere Kraft als die Soll-Referenzkraft bewirkbar ist, wenn die Referenzkraft erhöht wird, oder kurzzeitig eine niedrigere Kraft als die Soll-Referenzkraft bewirkbar ist, wenn die Referenzkraft vermindert wird.

13. Verfahren zum Kalibrieren einer Kraft-Messeinrichtung (4) in einem Prüfstand nach einem der Ansprüche 1 bis 12, mit den Schritten
- Bereitstellen des Prüfstands mit
+ einer um eine Hauptachse pendelnd gelagerten Lasteinrichtung (2),
+ einem sich senkrecht zu einem Gehäuse der Lasteinrichtung (2) erstreckenden Hebelarm (3),
+ der Kraft-Messeinrichtung (4), die mit dem Hebelarm (3) gekoppelt ist,
+ einer Referenzkraft-Erzeugungseinrichtung (7), die bezüglich dem Gehäuse der Lasteinrichtung (2) auf der gleichen Seite wie die Kraft-Messeinrichtung (4) angeordnet ist und mit dem Hebelarm (3) gekoppelt ist, und mit
+ einer im Kraftfluss zwischen der Referenzkraft-Erzeugungseinrichtung (7) und dem Hebelarm (3) angeordneten Referenzkraft-Messeinrichtung (8) zum Messen der jeweils erzeugten Referenzkraft;
- Erzeugen einer Referenzkraft durch die Referenzkraft-Erzeugungseinrichtung (7);
- Messen der Referenzkraft durch die Referenzkraft-Messeinrichtung (8);
- Messen der an der Kraft-Messeinrichtung (4) wirkenden Kraft in Form eines Kraft-Istwerts;
- Bestimmen eines Kraft-Sollwerts, der aufgrund der gemessenen Referenzkraft und der wirksamen Hebelverhältnisse an der Kraft-Messeinrichtung (4) anliegen müsste;
- Kalibrieren der Kraft-Messeinrichtung (4) derart, dass der von der Kraft-Messeinrichtung (4) gemessene Kraft-Istwert mit dem Kraft-Sollwert verglichen wird.

14. Verfahren nach Anspruch 13, **dadurch gekennzeichnet, dass**
- beim Erzeugen der Referenzkraft zunächst ein Überschwingen der Referenzkraft über den gewünschten Referenzkraft-Wert hinaus bewirkt wird.

15. Verfahren nach Anspruch 13 oder 14, **dadurch gekennzeichnet, dass** die Referenzkraft-Erzeugungseinrichtung (7) derart angesteuert wird, dass der Hebelarm (3) nicht mit einer Kraft durch die Referenzkraft-Erzeugungseinrichtung (7) belastet wird.

## Claims

1. Test rig with a device for calibrating a force measuring system (4), with
- a loading device (2) supported to oscillate about a principal axis (X) with a housing;
- a lever arm (3) extending perpendicular to the principal axis (X) from the housing; and with
- a force transmission device (5) coupled with the lever arm (3) for transmission of a force directed perpendicular to the principal axis (X) and perpendicular to the lever arm (3);
wherein
- the force measuring system (4) is coupled to the lever arm (3) by the force transmission device (5);
**characterised by**
- a reference force generating device (7) for generating reference forces in opposing directions;
- a reference force measuring device (8) coupled with the reference force generating device (7) for measuring the respective reference force; and by
- a reference force transmission device (10) coupled with the lever arm (3) for transmitting the reference force to the lever arm (3).

2. Test rig in accordance with claim 1, **characterised in that**
the force measuring device (4) with the force transmission device (5) and the reference force generating device (7) with the reference force transmission device (10) are arranged on the same side of the housing with respect to the principal axis.

3. Test rig in accordance with claim 1 or 2, **characterised in that**
the reference force generating device (7) comprises a pneumatic or hydraulic cylinder unit.

4. Test rig in accordance with one of the claims 1 to 3, **characterised in that**
- the loading device (2) is a dynamometer; and that
- the lever arm (3) is fastened to a stator housing of the dynamometer and extends perpendicular to the principal axis (X).

5. Test rig in accordance with one of the claims 1 to 4, **characterised in that**
the reference force transmission device (10) is arranged on the outer end of the lever arm (3).

6. Test rig in accordance with one of the claims 1 to 5, **characterised in that**
the reference force transmission device comprises a yoke (10) surrounding the outer end of the lever arm (3).

7. Test rig in accordance with claim 6, **characterised in that**
- a combination of a knife edge (11) and a knife-edge bearing (12) is arranged above and below the lever arm (3) respectively between the yoke (10) and the lever arm (3) for transmitting the reference force; and that
- either the knife edge (11) and the opposing knife edge bearing (12) are respectively arranged on the lever arm (3) or on the yoke (10) or the knife edge (11) and the opposing knife edge bearing (12) are respectively arranged on the yoke (10) and on the lever arm (3).

8. Test rig in accordance with claim 6, **characterised in that**
- the yoke (10) substantially comprises a rectangular frame (13), which surrounds the outer end of the lever arm (3);
- one edge of a piece of foil (14) is fastened to the frame (13) respectively to the upper and/or to lower side of the frame (13); and that
- a portion of the piece of foil (14) between the upper side and the lower side of the frame (13) is fastened to the end of the lever arm (3).

9. Test rig in accordance with claim 8, **characterised in that**
- the piece of foil (14) is clamped with its upper edge to the upper side of the frame (13) and with its lower edge to the lower side of the frame (13); and that
- a middle portion of the piece of foil (14) is clamped to an end face of the lever arm (3).

10. Test rig in accordance with claim 8 or 9, **characterised in that** the piece of foil (14) is formed by two separate pieces of foil;
- that one of the pieces of foil is an upper piece of foil, which is clamped between the upper edge of the frame (13) and the end face of the lever arm (3); and that
- the other of the pieces of foil is a lower piece of foil, which is clamped between the lower edge of the frame (13) and the end face of the lever arm (3).

11. Test rig in accordance with one of the claims 1 to 10, **characterised in that**
the reference force generating device (7) is supported by means of a compensation device (16) on a bearing coupled to a base (1) of the test rig, wherein the compensation device (16) is configured to compensate for errors in alignment and/or angle.

12. Test rig in accordance with one of the claims 1 to 11, **characterised in that**
- a control means is provided for controlling the reference force-generating device (7); and that
- a higher force than the target reference force can be effected briefly by the control means when setting a desired target reference force, when the reference force is increased, or a lower force than the target reference force can be effected briefly by the control means when setting a desired target reference force, when the reference force is decreased.

13. Method for calibrating a force measuring device (4) in a test rig in accordance with one of the claims 1 to 12, with the steps
- provision of the test rig with
+ a loading device (2) supported to oscillate about a principal axis,
+ a lever arm (3) extending perpendicular to a housing of the loading device (2),
+ the force measuring device (4), which is coupled with the lever arm (3),
+ a reference force-generating device (7), which is arranged with respect to the housing of the loading device (2) on the same side as the force measuring device (4) and is coupled with the lever arm (3), and with
+ a reference force measuring device (8) arranged in the force flow between the reference force-generating device (7) and the lever arm (3) for measuring the respective reference force generated;
- generation of a reference force by the reference force-generating device (7)
- measurement of the reference force by the reference force measuring device (8);
- measurement of the force acting on the force measuring device (4) in the form of an actual force value;
- determination of a target force value which must be exerted on the force measuring device (4) on the basis of the measured reference force and the effective lever ratios;
- calibration of the force measuring device (4) so that the actual force value measured by the force measuring device (4) is compared with the target force value.

14. Method in accordance with claim 13, **characterised in that**
- during generation of the reference force, initially the reference force is caused to overshoot the desired reference force value.

15. Method in accordance with claim 13 or 14, **characterised in that** the reference force-generating device (7) is controlled so that the lever arm (3) is not loaded with a force by the reference force-generating device (7).

## Revendications

1. Banc d'essai avec un dispositif pour étalonner un dispositif de mesure de force (4), avec
- un dispositif de charge (2) monté oscillant autour d'un axe principal (X) et pourvu d'un boîtier ;
- un bras de levier (3) qui s'étend à l'opposé du boîtier, perpendiculairement à l'axe principal (X) ; et avec
- un dispositif de transmission de force (5) accouplé au bras de levier (3), pour transmettre une force dirigée perpendiculairement à l'axe principal (X) et perpendiculairement au bras de levier (3) ;
- le dispositif de mesure de force (4) étant accouplé au bras de levier (3) par le dispositif de transmission de force (5) ;
**caractérisé par**
- un dispositif générateur de force de référence (7) pour générer des forces de référence dans des directions opposées ;
- un dispositif de mesure de force de référence (8) accouplé au dispositif générateur de force de référence (7), pour mesurer la force de référence générée ; et par
- un dispositif de transmission de force de référence (10) accouplé au bras de levier (3), pour transmettre la force de référence au bras de levier (3).

2. Banc d'essai selon la revendication 1, **caractérisé en ce que** le dispositif de mesure de force (4) avec le dispositif de transmission de force (5), et le dispositif générateur de force de référence (7) avec le dispositif de transmission de force de référence (10) sont disposés du même côté du boîtier, par rapport à l'axe principal.

3. Banc d'essai selon la revendication 1 ou 2, **caractérisé en ce que** le dispositif générateur de force de référence (7) comporte une unité pneumatique ou de cylindre hydraulique.

4. Banc d'essai selon l'une des revendications 1 à 3, **caractérisé en ce que**
- le dispositif de charge (2) est un dynamomètre ; et **en ce que**
- le bras de levier (3) est fixé à un boîtier de stator du dynamomètre et s'étend perpendiculairement à l'axe principal (X).

5. Banc d'essai selon l'une des revendications 1 à 4, **caractérisé en ce que** le dispositif de transmission de force de référence (10) est disposé à l'extrémité du bras de levier (3).

6. Banc d'essai selon l'une des revendications 1 à 5, **caractérisé en ce que** le dispositif de transmission de force de référence comporte une armature (10) qui entoure l'extrémité extérieure du bras de levier (3).

7. Banc d'essai selon la revendication 6, **caractérisé en ce que**
- au-dessus et au-dessous du bras de levier (3) est disposé, entre l'armature (10) et le bras de levier (3), un accouplement composé d'une lame (11) et d'un palier de lame (12), pour transmettre la force de référence ; et **en ce que**
- soit la lame (11) est prévue sur le bras de levier (3) et le palier de lame (12) opposé sur l'armature (10), soit la lame (11) est prévue sur l'armature (10) et le palier de lame (12) opposé sur le bras de levier (3).

8. Banc d'essai selon la revendication 6, **caractérisé en ce que**
- l'armature (10) comporte un cadre (13) globalement rectangulaire qui entoure l'extrémité du bras de levier (3) ;
- sur le côté supérieur et/ou sur le côté inférieur du cadre (13), un bord d'un morceau de feuille (14) est fixé à l'armature (13) ; et **en ce**
- **qu'**une zone du morceau de feuille (14) située entre le côté supérieur et le côté inférieur du cadre est fixée à l'extrémité du bras de levier (3).

9. Banc d'essai selon la revendication 8, **caractérisé en ce que**
- le morceau de feuille (14) est calé avec son bord supérieur sur le côté supérieur du cadre (13), et avec son bord inférieur sur le côté inférieur du cadre (13) ; et **en ce**
- **qu'**une zone centrale du morceau de feuille (14) est calée sur une extrémité frontale du bras de levier (3).

10. Banc d'essai selon la revendication 8 ou 9, **caractérisé en ce que**
- le morceau de feuille (14) est formé par deux éléments de feuille séparés ;
- un élément de feuille est un élément de feuille supérieur qui est calé entre le bord supérieur du cadre (13) et l'extrémité frontale du bras de levier (3) ; et **en ce que**
- l'autre élément de feuille est un élément de feuille inférieur qui est calé entre le bord inférieur du cadre (13) et l'extrémité frontale du bras de levier (3)

11. Banc d'essai selon l'une des revendications 1 à 10, **caractérisé en ce que**
le dispositif générateur de force de référence (7) est en appui, par l'intermédiaire d'un dispositif compensateur (16), sur un palier couplé à un socle (1) du banc d'essai, le dispositif compensateur (16) étant conçu pour compenser des erreurs d'alignement et/ou d'angle.

12. Banc d'essai selon l'une des revendications 1 à 11, **caractérisé en ce**
- **qu'**un dispositif de commande est prévu pour commander le dispositif générateur de force de référence (7) ; et en ce que
- grâce au dispositif de commande, lors du réglage d'une force de référence théorique souhaitée une force supérieure à la force de référence théorique est apte à agir brièvement si la force de référence est accrue, ou une force inférieure à la force de référence théorique est apte à agir brièvement si la force de référence est réduite.

13. Procédé pour étalonner un dispositif de mesure de force (4) dans un banc d'essai selon l'une des revendications 1 à 12, avec les étapes
- de préparation du banc d'essai avec
+ un dispositif de charge (2) monté oscillant autour d'un axe principal ;
+ un bras de levier (3) qui s'étend perpendiculairement à un boîtier du dispositif de charge (2),
+ le dispositif de mesure de force (4) qui est couplé au bras de levier (3),
+ un dispositif générateur de force de référence (7) qui est disposé du même côté que le dispositif de mesure de force (4), par rapport au boîtier du dispositif de charge (2), et qui est couplé au bras de levier (3), et avec
+ un dispositif de mesure de force de référence (8), disposé dans le flux de force entre le dispositif générateur de force de référence (7) et le bras de levier (3), pour mesurer la force de référence générée ;
- de production d'une force de référence par le dispositif générateur de force de référence (7) ;
- de mesure de la force de référence par le dispositif de mesure de force de référence (8) ;
- de mesure de la force agissant au niveau du dispositif de mesure de force (4), sous la forme d'une valeur de force réelle ;
- de définition d'une valeur de force théorique qui devrait être appliquée au niveau du dispositif de mesure de force (4) sur la base de la force de référence mesurée et des rapports de levier actifs ;
- d'étalonnage du dispositif de mesure de force (4) de telle sorte que la valeur de force réelle mesurée par le dispositif de mesure de force (4) soit comparée à la valeur de force théorique.

14. Procédé selon la revendication 13, **caractérisé en ce que**
- lors de la production de la force de référence, un dépassement de la force de référence au-delà de la valeur de force de référence souhaitée est tout d'abord provoqué.

15. Procédé selon la revendication 13 ou 14, **caractérisé en ce que** le dispositif générateur de force de référence (7) est commandé de telle sorte que le bras de levier (3) ne soit pas contraint avec une force par le dispositif générateur de force de référence (7).
